# EUROPEAN PATENT SPECIFICATION

(11) **EP 1 997 386 B1**
(45) Date of publication and mention of the grant of the patent: **23.12.2009**
(21) Application number: 08015350.5
(22) Date of filing: 24.09.2002
(51) Int. Cl.: A23G 4/06

(54) **Low moisture chewing gum**
Kaugummi mit niedrigem Feuchtigkeitsgehalt
Chewing gum à faible teneur en eau

(43) Date of publication of application: 03.12.2008
(62) Divisional of application: 02779227.4
(73) Proprietor: Gumlink A/S, 7100 Vejle (DK)
(72) Inventor: Andersen, Lone, 5500 Middelfart (DK); Wittorff, Helle, 7120 Veijle Øst (DK)
(74) Representative: Olesen, Kaj

(56) References cited:
- EP-A- 0 711 506
- US-A- 4 968 511

## Description

### Field of the invention

The present invention relates to a chewing gum comprising at least one biodegradable chewing gum polymer.

### Background of the invention

A problem of the above described prior art biodegradable chewing gum is that the chewing gum formulations applied typically degrades prior to the chewing of the chewing gum.

It is the object of the invention to obtain a chewing gum in which the degradation of the biodegradable polymer or polymers are minimized prior to the chewing of the chewing gum.

### Summary of the invention

According to the invention, it has been realized that even relatively small amounts of water in the chewing gum containing biodegradable polymers affects the degradation of the chewing gum even before chewing has occurred.

Therefore, a small amount of water or moisture within the chewing gum is highly desired.

Moisture in chewing gum is typically provided by different water containing chewing gum ingredients such as sweeteners. One type of sweetener is carbohydrate syrups, such as conventional corn syrups or sugar alcohol syrups (including sorbitol solutions and hydrogenated starch hydrolysate solutions) typically added to chewing gum compositions to improve binding and softness characteristics in the gum.

A problem of a low moisture chewing gum is however generally, that a lower water content results in a less attractive texture of the chewing gum Therefore, additional softeners typically needs to be added.

This is however a problem, when dealing with biodegradable chewing gum due to the fact that chewing gum made on the basis of biodegradable polymer has turned out to be more vulnerable to softeners than chewing gum made on the basis of conventional polymers.

Surprisingly, it has been realized that chewing gum made on the basis of biodegradable polymers, most probably due to the hydrophilic nature of typical biodegradable polymers, exhibits a significantly faster gaining of softness during the initial chew compared to chewing gum made on the basis of conventional hydrophobic polymers.

According to several experiments under different conditions, a chewing gum made on the basis of biodegradable polymers actually having an initial stiffness (the very first chew) greater than conventional chewing gum, actually increases in softness much faster than conventional chewing gum, thereby reaching the initial acceptable texture before the conventional chewing gum. It has moreover been realized that this phenomena is also present when almost no moisture is present in the chewing gum as from the beginning.

According to the invention, a biodegradable chewing gum having low moisture has been provided. According to the invention, low moisture content has been obtained in combination with an initial acceptable texture.

In an embodiment of the invention the chewing gum contains less than 2.0 weight percent water of the chewing gum

In an embodiment of the invention the chewing gum contains from 0.01 to 2.0 weight percent water of the chewing gum.

According to an embodiment of the inventions, degradability tests have revealed that an acceptable chewing gum product having a certain stability with respect to degradation may be obtained when applying for moisture content as high as approximately 1.0 weight percent of water indicating that the water content may be as high as 2.0 weight percent water of the chewing gum.

In an embodiment of the invention the chewing gum contains less than 1.0 weight percent water of the chewing gum

In an embodiment of the invention the chewing gum contains less than 0.75 weight percent water of the chewing gum

In an embodiment of the invention the chewing gum contains less than 0.2 weight percent water of the chewing gum

In an embodiment of the invention the chewing gum is substantially free of water containing sweeteners or softeners.

In an embodiment of the invention the chewing gum contains at least one low hygroscopic softener or sweetener.

In an embodiment of the invention the chewing gum contains at least one low hygroscopic softeners or chewing gum comprises powdered erythritol.

Aqueous syrups, such as corn syrup and hydrogenated corn syrup may be used, particularly if their moisture content is reduced. This can preferably be done by coevaporating the aqueous syrup with a plasticizer, such as glycerin or propylene glycol, to a moisture content of less than 10%. Preferred compositions include hydrogenated starch hydrolyzate solids and glycerin. Such syrups and their methods of preparation are discussed in detail in U.S. Pat. No. 4,671,967, incorporated herein by reference.

In an embodiment of the invention the at least one biodegradable polymer is a polyester polymer obtained by the polymerization of one or more cyclic esters by ring-opening and where at least one of the cyclic esters are selected from the groups of glycolides, lactides, lactones, cyclic carbonates or mixtures thereof.

In an embodiment of the invention the at least one biodegradable polymer is a polyester copolymer obtained by the polymerization of two or more cyclic esters by ring-opening and where at least one of the cyclic esters are selected from the groups of glycolides, lactides, lactones, cyclic carbonates or mixtures thereof.

In an embodiment of the invention the rheological properties of the degradable polymer is controlled by adjusting the functional number of initiator.

In an embodiment of the invention the lactone monomers are chosen from the group of ε-caprolactone, δ-valerolactone, γ-butyrolactone, and β-propiolactone. It also includes ε-caprolactones, δ-valerolactones, γ-butyrolactones, or β-propiolactones that have been substituted with one or more alkyl or aryl substituents at any non-carbonyl carbon atoms along the ring, including compounds in which two substituents are contained on the same carbon atom and mixtures thereof.

In an embodiment of the invention the carbonate monomer is selected from the group of trimethylene carbonate, 5-alkyl-1,3-dioxan-2-one, 5,5-dialkyl-1,3-dioxan-2-one, or 5-alkyl-5-alkyloxycarbonyl-1,3-dioxan-2-one, ethylene carbonate, 3-ethyl-3-hydroxymethyl, propylene carbonate, trimethylolpropane monocarbonate, 4, 6dimethyl-1, 3-propylene carbonate, 2, 2-dimethyl trimethylene carbonate, and 1, 3-dioxepan-2-one and mixtures thereof.

In an embodiment of the invention said chewing gum ingredients comprise flavoring agents.

In an embodiment of the invention said flavoring agents comprise natural and synthetic flavourings in the form of natural vegetable components, essential oils, essences, extracts, powders, including acids and other substances capable of affecting the taste profile

In an embodiment of the invention said chewing gum comprises flavor in an amount of 0.01 to about 30 wt %, said percentage being based on the total weight of the chewing gum

In an embodiment of the invention said chewing gum comprises flavor in an amount of 0.2 to about 4 wt %, said percentage being based on the total weight of the chewing gum

In an embodiment of the invention said flavor comprises water soluble ingredients.

In an embodiment of the invention said water soluble flavor comprises acids.

According to the invention, a surprising initial release of acids has been obtained.

In an embodiment of the invention said flavor comprising water insoluble ingredients.

In an embodiment of the invention, said chewing gum ingredients comprising sweeteners.

In an embodiment of the invention said sweetener comprises bulk sweeteners

In an embodiment of the invention the chewing gum comprises bulk sweeteners in an amount of about 5 to about 95% by weight of the chewing gum, more typically about 20 to about 80% by weight of the chewing gum.

In an embodiment of the invention the sweetener comprises high intensity sweeteners In an embodiment of the invention the high intensity sweeteners comprises sucralose, aspartame, salts of acesulfame, alitame, saccharin and its salts, cyclamic acid and its salts, glycyrrhizin, dihydrochalcones, thaumatin, monellin, sterioside, alone or in combination

In an embodiment of the invention wherein the chewing gum comprises high intensity sweeteners in an amount of about 0 to about 1% by weight of the chewing gum, more typically about 0.05 to about 0.5 % by weight of the chewing gum.

In an embodiment of the invention, the chewing gum comprises at least one softener.

In an embodiment of the invention, the at least one softener comprises tallow, hydrogenated tallow, hydrogenated and partially hydrogenated vegetable oils, cocoa butter, glycerol monostearate, glycerol triacetate, lecithin, mono-, di- and triglycerides, acetylated monoglycerides, fatty acids - such as stearic, palmitic, oleic and linoleic acids mixtures thereof.

In an embodiment of the invention the chewing gum comprises softeners in an amount of about 0 to about 18% by weight of the chewing gum, more typically about 0 to about 12 % by weight of the chewing gum.

In an embodiment of the invention, the chewing gum ingredients comprise active ingredients.

In an embodiment of the invention, said active ingredients are selected from the group of: Acetaminophen, Acetylsalicylsyre Buprenorphine Bromhexin Celcoxib Codeine, Diphenhydramin, Diclofenac, Etoricoxib, Ibuprofen, Indometacin, Ketoprofen, Lumiracoxib, Morphine, Naproxen, Oxycodon, Parecoxib, Piroxicam, Pseudoefedrin, Rofecoxib, Tenoxicam, Tramadol, Valdecoxib, Calciumcarbonat, Magaldrate, Disulfiram, Bupropion, Nicotine, Azithromycin, Clarithromycin, Clotrimazole, Erythromycin, Tetracycline, Granisetron, Ondansetron, Prometazin, Tropisetron, Brompheniramine, Ceterizin, leco-Ceterizin, Chlorcyclizine, Chlorpheniramin, Chlorpheniramin, Difenhydramine, Doxylamine, Fenofenadin, Guaifenesin, Loratidin, des-Loratidin, Phenyltoloxamine, Promethazin, Pyridamine, Terfenadin, Troxerutin, Methyldopa, Methylphenidate, Benzalcon. Chloride, Benzeth. Chloride, Cetylpyrid. Chloride, Chlorhexidine, Ecabet-sodium, Haloperidol, Allopurinol, Colchinine, Theophylline, Propanolol, Prednisolone, Prednisone, Fluoride, Urea, Miconazole, Actot, Glibenclamide, Glipizide, Metformin, Miglitol, Repaglinide, Rosiglitazone, Apomorfin, Cialis, Sildenafil, Vardenafil, Diphenoxylate, Simethicone, Cimetidine, Famotidine, Ranitidine, Ratinidine, cetrizin, Loratadine, Aspirin, Benzocaine, Dextrometorphan, Ephedrine, Phenylpropanolamine, Pseudoephedrine, Cisapride, Domperidone, Metoclopramide, Acyclovir, Dioctylsulfosucc., Phenolphtalein, Almotriptan, Eletriptan, Ergotamine, Migea, Naratriptan, Rizatriptan, Sumatriptan, Zolmitriptan, Aluminium salts, Calcium salts, Ferro salts, Silver salts, Zinc-salte, Amphotericin B, Chlorhexidine, Miconazole, Triamcinolonacetonid, Melatonine, Phenobarbitol, Caffeine, Benzodiazepiner, Hydroxyzine, Meprobamate, Phenothiazine, Buclizine, Brometazine, Cinnarizine, Cyclizine, Difenhydramine, Dimenhydrinate, Buflomedil, Amphetamine, Caffeine, Ephedrine, Orlistat, Phenylephedrine, Phenylpropanolamin, Pseudoephedrine, Sibutramin, Ketoconazole, Nitroglycerin, Nystatin, Progesterone, Testosterone, Vitamin B12, Vitamin C, Vitamin A, Vitamin D, Vitamin E, Pilocarpin, Aluminiumaminoacetat, Cimetidine, Esomeprazole, Famotidine, Lansoprazole, Magnesiumoxide, Nizatide and or Ratinidine or derivates and mixtures thereof.

In an embodiment of the invention, the chewing gum is substantially free of non-biodegradable polymers

In an embodiment of the invention the at least two ore more cyclic esters are selected from the groups of glycolides, lactides, lactones, cyclic carbonates or mixtures thereof.

In an embodiment of the invention the lactone monomers are chosen from the group of ε-caprolactone, δ-valerolactone, γ-butyrolactone, and β-propiolactone. It also includes ε-caprolactones, δ-valerolactones, γ-butyrolactones, or β-propiolactones that have been substituted with one or more alkyl or aryl substituents at any non-carbonyl carbon atoms along the ring, including compounds in which two substituents are contained on the same carbon atom.

In an embodiment of the invention the carbonate monomer is selected from the group of trimethylene carbonate, 5-alkyl-1,3-dioxan-2-one, 5,5-dialkyl-1,3-dioxan-2-one, or 5-alkyl-5-alkyloxycarbonyl-1,3-dioxan-2-one, ethylene carbonate, 3-ethyl-3-hydroxymethyl, propylene carbonate, trimethylolpropane monocarbonate, 4, 6dimethyl-1, 3-propylene carbonate, 2, 2-dimethyl trimethylene carbonate, and 1, 3-dioxepan-2-one and mixtures thereof.

In an embodiment of the invention the cyclic ester polymers and their copolymers resulting from the polymerization of cyclic ester monomers include, but are not limited to : poly (L-lactide) ; poly (D-lactide) ; poly (D, L-lactide) ; poly (mesolactide) ; poly (glycolide) ; poly (trimethylenecarbonate) ; poly (epsilon-caprolactone); poly (L lactide-co-D, L-lactide) ; poly (L-lactide-co-meso-lactide) ; poly (L-lactide co-glycolide) ; poly (L-lactide-co-trimethylenecarbonate) ; poly (L-lactide co-epsilon-caprolactone) ; poly (D, L-lactide-co-meso-lactide) ; poly (D, L lactide-co-glycolide) ; poly (D, L-lactide-co-trimethylenecarbonate) ; poly (D, L-lactide-co-epsilon-caprolactone) ; poly (meso-lactide-co glycolide) ; poly (meso-lactide-co-trimethylenecarbonate) ; poly (meso lactide-co-epsilon-caprolactone) ; poly (glycolide-cotrimethylenecarbonate) ; poly (glycolide-co-epsilon-caprolactone).

In an embodiment of the invention the chewing gum comprises filler.

A chewing gum base formulation may, if desired, include one or more fillers/texturisers including as examples, magnesium and calcium carbonate, sodium sulphate, ground limestone, silicate compounds such as magnesium and aluminium silicate, kaolin and clay, aluminium oxide, silicium oxide, talc, titanium oxide, mono-, di- and tri-calcium phosphates, cellulose polymers, such as wood, and combinations thereof.

In an embodiment of the invention the chewing gum comprises filler in an amount of about 0 to about 50% by weight of the chewing gum, more typically about 10 to about 40 % by weight of the chewing gum.

In an embodiment of the invention the chewing gum comprises at least one coloring agent.

According to an embodiment of the invention, the chewing gum may comprise color agents and whiteners such as FD&C-type dyes and lakes, fruit and vegetable extracts, titanium dioxide and combinations thereof Further useful chewing gum base components include antioxidants, e.g. butylated hydroxytoluene (BHT), butyl hydroxyanisol (BHA), propylgallate and tocopherols, and preservatives.

In an embodiment of the invention the chewing gum is coated with an outer coating.

In an embodiment of the invention the outer coating is a hard coating.

In an embodiment of the invention the hard coating is a coating selected from the group consisting of a sugar coating and a sugarless coating and a combination thereof.

In an embodiment of the invention the hard coating comprises 50 to 100% by weight of a polyol selected from the group consisting of sorbitol, maltitol, mannitol, xylitol, erythritol, lactitol and isomalt.

In an embodiment of the invention the outer coating is an edible film comprising at least one component selected from the group consisting of an edible film-forming agent and a wax.

In an embodiment of the invention the film-forming agent is selected from the group consisting of a cellulose derivative, a modified starch, a dextrin, gelatine, shellac, gum arabic, zein, a vegetable gum, a synthetic polymer and any combination thereof.

In an embodiment of the invention the outer coating comprises at least one additive component selected from the group consisting of a binding agent, a moisture absorbing component, a film forming agent, a dispersing agent, an antisticking component, a bulking agent, a flavouring agent, a colouring agent, a pharmaceutically or cosmetically active component, a lipid component, a wax component, a sugar, an acid and an agent capable of accelerating the after-chewing degradation of the degradable polymer.

In an embodiment of the invention the outer coating is a soft coating.

In an embodiment of the invention the soft coating comprises a sugar free coating agent.

In an embodiment of the invention the chewing gum comprises conventional chewing gum polymers or resins.

In an embodiment of the invention the at least one biodegradable polymer comprises at least 5% of the chewing gum polymers.

In an embodiment of the invention all the biodegradable polymers comprised in the chewing gum comprises at least 25%, preferably at least 50% of the chewing gum polymers.

In an embodiment of the invention the biodegradable polymers comprised in the chewing gum comprises at least 80%, preferably at least 90% of the chewing gum polymers.

In an embodiment of the invention the chewing gum comprises said at least one biodegradable polyester copolymer forming a plasticizer of the chewing gum and at least one non-biodegradable conventional elastomer

According to the invention, a biodegradable polymer according to the invention may form a substitute of a conventional natural or synthetic resin.

In an embodiment of the invention the chewing gum comprises the at least one biodegradable polyester copolymer forming an elastomer of the chewing gum and at least one non-biodegradable conventional natural or synthetic resin.

According to the invention, a biodegradable polymer according to the invention may form a substitute of a conventional low or high molecular weight elastomer.

In an embodiment of the invention said chewing gum comprises
at least one biodegradable elastomer in the amount of about 0.5 to about 70% wt of the chewing gum,
at least one biodegradable plasticizer in the amount of about 0.5 to about 70% wt of the chewing gum and
at least one chewing gum ingredient chosen from the groups of softeners, sweeteners, flavoring agents, active ingredients and fillers in the amount of about 2 to about 80% wt of the chewing gum.

In an embodiment of the invention edible polyesters may be applied as a degradable chewing gum polymer.

It should be understood, that according to the present invention two or more of the above-mentioned embodiments may be combined into further advantageous embodiments.

Edible polyesters are obtained by esterification of at least one alcohol and one acid.

The edible polyester is produced by condensation polymerization reaction of at least one alcohol chosen from the group of trihydroxyl alcohol and dihydroxyl alcohol, and at least one acid chosen from the group consisting of dicarboxylic acid and tricarboxylic acid.

It is possible to use edible or food grade materials. Because the starting acids and alcohols are food grade materials the resultant polymers is edible.
- Alcohols:: Glycerol, propylene glycol, 1,3 butylene diol
- Acids:: Citric acid, fumaric acid, adipic acid, malic acid, succinic acid, suberic acid, sebacic acid, dodecanedioic acid, glucaric acid, glutamic acid, glutaric, azelaic acid, tartaric acid

Edible polyesters can replace both elastomers and elastomer plasticizers and form 1-80% of the gum base.

### The drawing

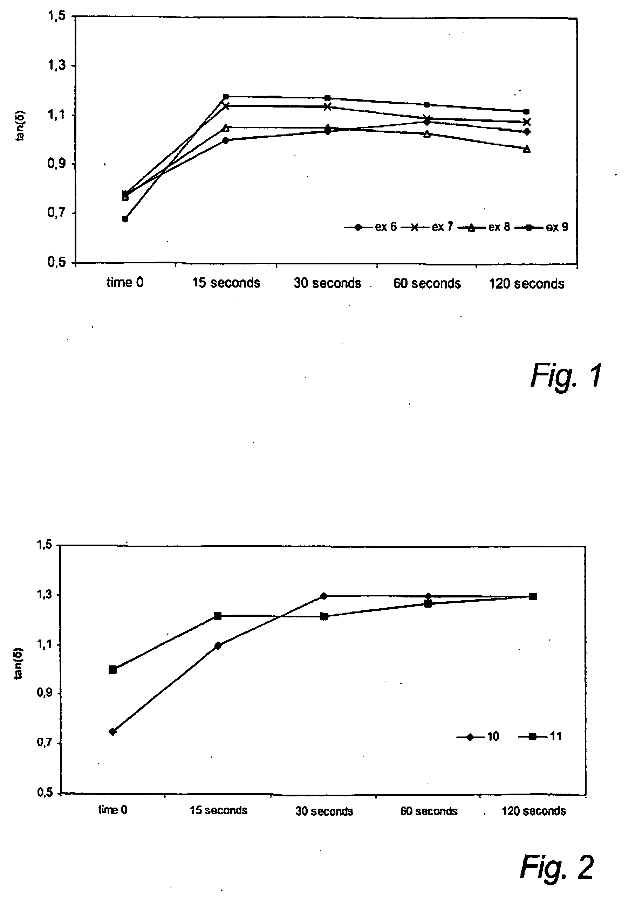

The invention will now be described with reference to the drawings of which fig. 1 and 2 illustrate the texture of chewing gum according to the inveniton.

### Detailed description

In the present context the terms environmentally or biologically degradable polymer compounds refers to chewing gum base components which, after dumping the chewing gum, is capable of undergoing a physical, chemical and/or biological degradation whereby the dumped chewing gum waste becomes more readily removable from the site of dumping or is eventually disintegrated to lumps or particles which are no longer recognisable as being chewing gum remnants. The degradation or disintegration of such degradable polymers can be effected or induced by physical factors such as temperature, light, moisture, by chemical factors such as hydrolysis caused by a change in pH or by the action of enzymes capable of degrading the polymers. In other useful embodiments all of the polymer components of the gum base are environmentally degradable or biodegradable polymers.

Preferably, the ultimate degradation products are carbon dioxide, methane and water.

According to a preferred definition of biodegradability according to the invention biodegradability is a property of certain organic molecules whereby, when exposed to the natural environment or placed within a living organism, they react through an enzymatic or microbial process, often in combination with a pure chemical process such as hydrolysis, to form simpler compounds, and ultimately, carbon dioxide, nitrogen oxides, and water.

Accordingly, suitable examples of additional environmentally or biologically degradable chewing gum base polymers which can be applied in accordance with the gum base of the present invention include degradable polyesters, polycarbonates, polyester amides, polypeptides, homopolymers of amino acids such as polylysine, and proteins including derivatives hereof such as e.g. protein hydrolysates including a zein hydrolysate. Particularly useful compounds of this type include polyester polymers obtained by the polymerisation of one or more cyclic esters such as lactide, glycolide, trimethylene carbonate, δ-valerolactone, β-propiolactone and ε-caprolactone. Such degradable polymers may be homopolymers or copolymers, including block-polymers.

Unless otherwise indicated, as used herein, the term "molecular weight" means number average molecular weight (Mn).

### EXAMPLE 1

### Preparation of resin

A resin sample was produced using a cylindrical glass, jacketed 10 L pilot reactor equipped with glass stir shaft and Teflon stir blades and bottom outlet. Heating of the reactor contents was accomplished by circulation of silicone oil, thermostated to 130°C, through the outer jacket. D,L-lactide (4.877 kg, 33.84 mol) was charged to the reactor and melted by heating to 140 °C for 6 h. After the D,L-lactide was completely molten, the temperature was reduced to 130 °C, and stannous octoate (1.79 g, 4.42 x 10⁻³ mol), 1,2-propylene glycol (79.87 g, 1.050 mol), and ε-caprolactone (290.76 g, 2.547 mol) were charged to the reactor. After the mixture became homogeneous, stirring was continued for 24 h at 130°C. At the end of this time, the bottom outlet was opened, and molten polymer was allowed to drain into a Teflon-lined paint can.
Characterization of the product indicated Mₙ = 5,700 g/mol and M_{w} = 7,100 g/mol (gel permeation chromatography with online MALLS detector) and Tg = 30.7 °C (DSC, heating rate 10°C/min).

### EXAMPLE 2

### Preparation of LMWE elastomer

A LMWE sample was synthesized within a dry N₂ glove box, as follows. Into a 500 mL resin kettle equipped with overhead mechanical stirrer, 0.40 g 1,2-propane diol (1.82 mL of a 22.0 % (w/v) solution in MeCl₂), and 0.094 g Sn(Oct)₂ (2.2 mL of a 4.27 % (w/v) solution of in MeCl₂) were charged under dry N₂ gas purge. The MeCl₂ was allowed to evaporate under the N₂ purge for 15 min. Then ε-caprolactone (170 g, 1.49 mol), TMC (76g, 0.74 mol), and δ-valerolactone (74 g, 0.74 mol) were added. The resin kettle was submerged in a 130 °C constant-temperature oil bath and stirred for 14 h. Subsequently the kettle was removed from the oil bath and allowed to cool to room temperature.
Characterization of the product indicated Mₙ = 57,960 g/mol and M_{w} = 85,910 g/mol (gel permeation chromatography with online MALLS detector) and T_{g} = - 59.8°C (DSC, heating rate 10°C/min).

### EXAMPLE 3

### Preparation of HMWE

A HMWE sample was synthesized in a dry N₂ glove box, as follows. Into a 500 mL resin kettle equipped with overhead mechanical stirrer was charged 0.037 g Sn(Oct)₂ (2.4 ml of a 1.54% (w/v) solution in methylene chloride) under dry N₂ gas purge. The methylene chloride was allowed to evaporate under the N₂ purge for 15 min. Then, pentaerythritol (0.068 g, 4.99 x 10⁻⁴ mol), ε-caprolactone (68.0g, 0.596 mol), TMC (7.0 g, 0.069 mol), and δ-valerolactone (33.0 g, 0.33 mol) were added. The resin kettle was then submerged in a 130 °C constant-temperature oil bath and stirred for about 2 - 2.5 h, at which time the mass solidified and could no longer be stirred. The reacting mass was then maintained at 130 °C for an additional 11.5 - 12 h for a total reaction time of 14 h. Subsequently the kettle was removed from the oil bath and allowed to cool to room temperature.
Characterization of the product indicated Mₙ = 113,900 g/mol and M_{w} = 369,950 g/mol (gel permeation chromatography with online MALLS detector).

### EXAMPLE 4

### Preparation of gum bases

All the gum bases are prepared with following basic formulation:

| Ingredients | Percent by weight |
|---|---|
| Elastomer HMWE | 20 |
| Elastomer LMWE | 40 |
| Resin | 40 |

The gum bases are prepared as follows:
HMWE elastomer is added to a mixing kettle provided with mixing means like e.g. horizontally placed Z-shaped arms. The kettle had been preheated for 15 minutes to a temperature of about 60-80 °C. The rubber is broken into small pieces and softened with mechanical action on the kettle.
The resin is slowly added to the elastomer until the mixture becomes homogeneous. The remaining resin is then added to the kettle and mixed for 10-20 minutes. The LMWE elastomer is added and mixed for 20-40 minutes until the whole mixture becomes homogeneous.
The mixture is then discharged into the pan and allowed to cool to room temperature from the discharged temperature of 60-80 °C, or the gumbase mixture is used directly for chewing gum by adding all chewing gum components in an appropriate order under continuous mixing.

### EXAMPLE 5

### Preparation of Chewing gum

All chewing gum formulations are prepared with the following basic formulation

| Ingredients | Percent by weight (Mint formulation with maltitol syrup) | Percent by weight (Mint formulation without maltitol syrup) |
|---|---|---|
| Gum base | 40 | 40 |
| Sorbitol | 48.6 | 51,6 |
| Maltitol syrup | 3 | - |
| Peppermint oil | 1.5 | 5 |
| Menthol crystals | 0.5 | 0.5 |
| Strawberry | - | - |
| Aspartame | 0.2 | 0.2 |
| Acesulfame | 0.2 | 0.2 |
| Xylitol | 6 | 6 |
| | | |
| Approx. amount | | |
| of water: | 1.5% | 0.5% |

The water is primary added via the maltitol syrup, but also contributions from the bulk sweetener are present.

The chewing gum products are prepared as follows:

The gum base is added to a mixing kettle provided with mixing means like e.g. horizontally placed Z-shaped arms. The kettle had been preheated for 15 minutes to temperatures of about 60-80 °C. Or the mixing step is continued directly from the gum base preparation i.e. in a one step operation. The mixing process is preformed at a temperatures between 60-80 °C.

One third portion of the sorbitol is added together with the gum base and mixed for 1-2 minutes. Another one third portion of the sorbitol and lycasin are then added to the kettle and mixed for 2 minutes. The remaining one third portion of sorbitol, peppermint and menthol are added and mixed for 2 minutes.Then aspartame and acesulfame are added to the kettle and mixed for 3 minutes. Xylitol is added and mixed for 3 minutes. The resulting gum mixture is then discharged and e.g. transferred to a pan at temperature of 40-48 °C. The gum is then rolled and scored into cores, sticks, balls, cubes, and nay other desired shape, optionally followed by coating and polishing processes prior to packaging.

### EXAMPLE 6-9

### Rheological texture profile of conventional and biodegradable chewing gum containing flavor.

| Ex | Gum base | Polymer 1 | Polymer 2 | Polymer 3 | Chewing gum |
|---|---|---|---|---|---|
| 6 | Standard conventional gum base | Butyl rubber Mn =117.000 | PIB Mn =30.000 | PVA Mn =5000 | Mint |
| 7 | Gum base based only on example 2 | Butyl rubber Mn =117.000 | Elastomer according to example 2 | PVA Mn =5000 | Mint |
| 8 | Gum base based only on example 1 | Butyl rubber Mn =117.000 | Polyisobutylen e Mn =30.000 | Polymer according to example 1 | Mint |
| 9 | Gum base based only on example 1-2 | Butyl rubber Mn =117.000 | Elastomer according to example 2 | Polymer according to example 1 | Mint |

Mint refers to the chewing gum formulation of example 5 with maltitol syrup.

Figure 1 illustrates rheological chewing profiles of the chewing gum corresponding to example 6-9.The gum centres were chewed in a chewing machine (CF Jansson). The chewing frequency was set to 1 Hz, a pH buffer was used as saliva and the temperature was set at 37 °C. The chewing time was set to 15 sec, 30 sec, 60 sec and 120 sec. After chewing, the chewed cud was measured on a rheometer, type AR1000 from TA Instruments in a frequency scan. The results from these measurements can be seen on Fig 1 and 2 wherein the storage modulus (G') and tan(δ ) versus chewing time is depicted illustrating the texture changes during chewing.

From figure 1 it can be seen that the biodegradable chewing gums ex. 7-9 are softening faster than the chewing gum ex. 6 being 100% conventional seen as an increased slope in tan δ i.e. a faster development of viscous flow. The figure also illustrates that ex. 9 containing 80% of biodegradable polymer is softening faster that the two other chewing gums containing only 40% biodegradable polymer.
This figure also states that textures of chewing gum containing biodegradable polymers are comparable to the texture of a conventional chewing gum. In summery, the more biodegradable polymer in the chewing gum the faster it softens.

### EXAMPLE 10-11

### Rheological texture profile of conventional and biodegradable chewing gum with and without maltitol syrup in the formulation.

| Ex | Gum base | Polymer 1 | Polymer 2 | Polymer 3 | Chewing gum |
|---|---|---|---|---|---|
| 10 | 100 % biodegradable gum base | Elastomer according to example 3 | Elastomer according to example 2 | Polymer according to example 1 | Mint (without maltitol syrup) |
| 11 | 100 % biodegradable gum base | Elastomer according to example 3 | Elastomer according to example 2 | Polymer according to example 1 | Mint (with maltitol syrup) |

Mint refers to the chewing gum formulation of example 5.

Figure 2 show the effect on texture when leaving the maltitol syrup out of the formulation as ex. 10 being without maltitol syrup is having a lower tan δ i.e. a higher stiffness. The texture of ex. 10 approaches ex. 11 fast reaching ex. 10 after approx. 20 seconds of chewing.
In summery, the loss of softness in the initial chew as seen in the chewing gum without maltitol syrup is fast compensated by the fast uptake of saliva in the chewing gum as a result of the hydrophilic nature of the biodegradable polymers used.

### EXAMPLE 12

### Hardness

The hardness of the two examples 10 and 11 were measured in order to determine instant hardness i.e. a measure of the chewing resistance in the first few chews in the chewing gums. The hardness of the test samples were tested by an compression load test using a TA-XT2i TEXTURE analyser from Stable Micro Systems with a 4 mm DIA CYLINDER STAINLESS at a speed of 0.4 mm/s using a test distance of 3.5 mm into the chewing gum body.
The test result (N) of this experiment is shown in the below Table 1

**Table 1: Hardness of biodegradable chewing gum with and without maltitol syrup-**

| Example | Hardness (N) | S.D |
|---|---|---|
| 10 | 9.29 | 1.46 |
| 11 | 33.27 | 0.69 |

As can be seen from the above Table 1, the chewing gum samples containing maltitol syrup are softer than the chewing gum without the maltitol syrup in accordance with the result in example 10-11.

### EXAMPLE 13

### Degradation of biodegradable chewing gum with and without maltitol syrup in the formulation.

A panel evaluated the two samples over a period of 4 months every one month. The following rating was used:

**Table 2: Ratings**

| Rating | Description |
|---|---|
| 1 | Very poor |
| 2 | Poor |
| 3 | Acceptable |
| 4 | Good |
| 5 | Very good |

**Table 3: Evaluation of degradation**

| Time | Example 10 | | Example 11 | |
|---|---|---|---|---|
| | Texture | Taste | Texture | Taste |
| 0 month | 4 | 5 | 4 | 5 |
| 1 month | 4 | 5 | 4 | 5 |
| 2 month | 4 | 5 | 3 | 4 |
| 3 month | 4 | 4 | 3 | 3 |
| 4 month | 4 | 4 | 1-2 | 2 |

Experiments by evaluating the texture and the taste as a function of time have shown that the ex. 10 - without maltitol syrup - has significant improved taste and texture. Hence, it is thereby indicated that low water content in the chewing gum formulations improves the biodegradable chewing gum resulting in a prolonged shelf life.
The degradation rate according to example 11 is regarded as acceptable for certain purposes.

## Claims

1. Chewing gum comprising at least one biodegradable polymer and chewing gum ingredients,
wherein said chewing gum ingredients are selected from the group consisting of softeners, sweeteners, flavouring agents, active ingredients, fillers and mixtures thereof,
wherein said chewing gum contains less than 2.0 weight percent water of the chewing gum and
wherein said at least one biodegradable polymer is obtained by esterification of at least one alcohol and one acid.

2. Chewing gum according to claim 1,
wherein said at least one biodegradable polymer comprises a polyester produced by condensation polymerization reaction of at least one alcohol chosen from the group of trihydroxyl alcohol and dihydroxyl alcohol and at least one acid chosen from the group consisting of dicarboxylic and tricarboxylic acid.

3. Chewing gum according to claim 1 or 2,
wherein said at least one alcohol is chosen from the group consisting of glycerol, propylene glycol and 1,3 butylene diol.

4. Chewing gum according to any of the claims 1-3,
wherein said at least one acid is chosen from the group consisting of citric acid, fumaric acid, adipic acid, malic acid, succinic acid, suberic acid, sebacic acid, dodecanedioic acid, glucaric acid, glutamic acid, glutaric acid, azelaic acid and tartaric acid.

5. Chewing gum according to claim 1, wherein said at least one biodegradable polymer constitutes at least 25% by weight of the chewing gum polymers.

6. Chewing gum according to claim 1,
wherein said at least one biodegradable polymer constitutes at least 80% by weight of the chewing gum polymers.

7. Chewing gum according to claim 1,
wherein the chewing gum is substantially free of non-biodegradable polymers.

8. Chewing gum according to claim 1,
wherein said at least one biodegradable polymer forms an elastomer of the chewing gum.

9. Chewing gum according to claim 1,
wherein said at least one biodegradable polymer forms a plasticizer of the chewing gum.

10. Chewing gum according to claim 1,
wherein said chewing gum comprises a biodegradable polymer selected from the group consisting of degradable polyesters, polycarbonates, polyester amides, polypeptides, homopolymers of amino acids, proteins and derivatives hereof including protein hydrolysates such as zein hydrolysate.

11. Chewing gum according to claim 1,
wherein the chewing gum is substantially free of water-containing sweeteners or softeners.

12. Chewing gum according to claim 1,
wherein the chewing gum comprises at least one low hygroscopic softener or sweetener.

13. Chewing gum according to claim 1,
wherein said chewing gum contains less than 10 weight percent water of the chewing gum.

14. Chewing gum according to claim 1, where the chewing gum is coated with an outer coating.

15. Chewing gum according to claim 1, wherein said flavouring agents comprises natural and synthetic flavorings in the form of natural vegetable components, essential oils, essences, extracts, powders, including acids and other substances capable of affecting the taste profile

## Patentansprüche

1. Kaugummi, umfassend mindestens ein bioabbaubares Polymer und Kaugummi-Zutaten,
wobei die Kaugummi-Zutaten ausgewählt sind aus der Gruppe bestehend aus Weichmachern, Süßungsmitteln, Geschmacksstoffen, aktiven Bestandteilen, Füllstoffen und deren Mischungen,
wobei der Kaugummi weniger als 2,0 Gew.-% des Kaugummis Wasser enthält und
wobei das mindestens eine bioabbaubare Polymer durch Veresterung mindestens eines Alkohols und einer Säure erhalten wird.

2. Kaugummi nach Anspruch 1,
wobei das mindestens eine bioabbaubare Polymer einen Polyester umfasst, der hergestellt wird durch Kondensationspolymerisationsreaktion mindestens eines Alkohols, der aus der Gruppe von Trihydroxylalkohol und Dihydroxylalkohol ausgewählt ist, und mindestens einer Säure, die aus der Gruppe bestehend aus Dicarbon- und Tricarbonsäure ausgewählt ist.

3. Kaugummi nach Anspruch 1 oder 2, wobei der mindestens eine Alkohol ausgewählt ist aus der Gruppe bestehend aus Glycerol, Propylenglycol und 1,3-Butylendiol.

4. Kaugummi nach irgendeinem der Ansprüche 1 - 3,
wobei die mindestens eine Säure ausgewählt ist aus der Gruppe bestehend aus Citronensäure, Fumarsäure, Adipinsäure, Äpfelsäure, Bernsteinsäure, Suberinsäure, Sebacinsäure, Dodecandisäure, Glucarsäure, Glutaminsäure, Glutarsäure, Azelainsäure und Weinsäure.

5. Kaugummi nach Anspruch 1,
wobei das mindestens eine bioabbaubare Polymer mindestens 25 Gew.-% der Kaugummi-Polymere ausmacht.

6. Kaugummi nach Anspruch 1,
wobei das mindestens eine bioabbaubare Polymer mindestens 80 Gew.-% der Kaugummi-Polymere ausmacht.

7. Kaugummi nach Anspruch 1,
wobei der Kaugummi im Wesentlichen frei von nicht-bioabbaubaren Polymeren ist.

8. Kaugummi nach Anspruch 1,
wobei das mindestens eine bioabbaubare Polymer ein Elastomer des Kaugummis bildet.

9. Kaugummi nach Anspruch 1,
wobei das mindestens eine bioabbaubare Polymer einen Weichmacher des Kaugummis bildet.

10. Kaugummi nach Anspruch 1,
wobei der Kaugummi ein bioabbaubares Polymer umfasst, das ausgewählt ist aus der Gruppe bestehend aus abbaubaren Polyestern, Polycarbonaten, Polyesteramiden, Polypeptiden, Homopolymeren von Aminosäuren, Proteinen und deren Derivaten, einschließlich Proteinhydrolysaten, wie Zein-Hydrolysat.

11. Kaugummi nach Anspruch 1,
wobei der Kaugummi im Wesentlichen frei von wasserhaltigen Süßungsmitteln oder Weichmachern ist.

12. Kaugummi nach Anspruch 1,
wobei der Kaugummi mindestens einen wenig hygroskopischen Weichmacher oder ein wenig hygroskopisches Süßungsmittel umfasst.

13. Kaugummi nach Anspruch 1,
wobei der Kaugummi weniger als 1,0 Gew.-% des Kaugummis Wasser enthält.

14. Kaugummi nach Anspruch 1, wobei der Kaugummi mit einem äußeren Überzug überzogen ist.

15. Kaugummi nach Anspruch 1, wobei die Geschmacksstoffe natürliche und synthetische Geschmacksstoffe in Form von natürlichen pflanzlichen Komponenten, ätherischen Ölen, Essenzen, Extrakten, Pulvern, einschließlich Säuren und anderer Substanzen, die das Geschmacksprofil beeinflussen können, umfassen.

## Revendications

1. Gomme à mâcher comprenant au moins un polymère biodégradable et des ingrédients de gomme à mâcher,
dans laquelle lesdits ingrédients de gomme à mâcher sont choisis dans le groupe constitué par les ramollissants, les édulcorants, les agents de saveur, les ingrédients actifs, les charges et leurs mélanges,
dans laquelle ladite gomme à mâcher contient moins de 2,0 pour cent d'eau en poids de la gomme à mâcher et
dans laquelle ledit au moins un polymère biodégradable est obtenu par l'estérification d'au moins un alcool et d'un acide.

2. Gomme à mâcher selon la revendication 1,
dans laquelle ledit au moins un polymère biodégradable comprend un polyester produit par la réaction de polymérisation par condensation d'au moins un alcool choisi dans le groupe comprenant un alcool trihydroxylique et un alcool dihydroxylique, et d'au moins un acide choisi dans le groupe constitué par un acide dicarboxylique et un acide tricarboxylique.

3. Gomme à mâcher selon la revendication 1 ou 2,
dans laquelle ledit au moins un alcool est choisi dans le groupe constitué par le glycérol, le propylène glycol et le 1,3-butylènediol.

4. Gomme à mâcher selon l'une quelconque des revendications 1 à 3,
dans laquelle ledit au moins un acide est choisi dans le groupe constitué par l'acide citrique, l'acide fumarique, l'acide adipique, l'acide malique, l'acide succinique, l'acide subérique, l'acide sébacique, l'acide dodécanoïque, l'acide glucarique, l'acide glutamique, l'acide glutarique, l'acide azélaïque et l'acide tartrique.

5. Gomme à mâcher selon la revendication 1,
dans laquelle ledit au moins un polymère biodégradable constitue au moins 25 % en poids des polymères de la gomme à mâcher.

6. Gomme à mâcher selon la revendication 1,
dans laquelle ledit au moins un polymère biodégradable constitue au moins 80 % en poids des polymères de la gomme à mâcher.

7. Gomme à mâcher selon la revendication 1,
dans laquelle la gomme à mâcher est sensiblement exempte de polymères non biodégradables.

8. Gomme à mâcher selon la revendication 1,
dans laquelle ledit au moins un polymère biodégradable forme un élastomère de la gomme à mâcher.

9. Gomme à mâcher selon la revendication 1,
dans laquelle ledit au moins un polymère biodégradable forme un plastifiant de la gomme à mâcher.

10. Gomme à mâcher selon la revendication 1,
dans laquelle ladite gomme à mâcher comprend un polymère biodégradable choisi dans le groupe constitué par les polyesters dégradables, les polycarbonates, les polyester amides, les polypeptides, les homopolymères d'acides aminés, les protéines et leurs dérivés, y compris les hydrolysats de protéines, comme l'hydrolysat de zéine.

11. Gomme à mâcher selon la revendication 1,
dans laquelle la gomme à mâcher est sensiblement exempte d'édulcorants ou de ramollissants contenant de l'eau.

12. Gomme à mâcher selon la revendication 1,
dans laquelle la gomme à mâcher comprend au moins un ramollissant ou édulcorant peu hygroscopique.

13. Gomme à mâcher selon la revendication 1,
dans laquelle ladite gomme à mâcher contient moins de 1,0 pour cent d'eau en poids de la gomme à mâcher.

14. Gomme à mâcher selon la revendication 1, où la gomme à mâcher est enrobée avec un revêtement externe.

15. Gomme à mâcher selon la revendication 1, dans laquelle lesdits agents de saveur comprennent des saveurs naturelles et synthétiques sous la forme de composants végétaux naturels, d'huiles essentielles, d'essences, d'extraits, de poudres, y compris des acides et d'autres substances capables d'avoir une action sur le profil gustatif.
